Europäisches Patentamt

European Patent Office

Office européen des brevets

(19)

(11) Veröffentlichungsnummer: **0 285 935**
**B1**

(12) **EUROPÄISCHE PATENTSCHRIFT**

(45) Veröffentlichungstag der Patentschrift:
06.06.90

(51) Int. Cl.⁵: **C11D 3/37, C11D 3/00**

(21) Anmeldenummer: 88104892.0

(22) Anmeldetag: 26.03.88

(54) Verwendung von Pfropfpolymerisaten auf Basis von Polyalkylenoxiden als Vergrauungsinhibitoren beim Waschen und Nachbehandeln von Synthesefasern enthaltendem Textilgut.

(30) Priorität: 03.04.87 DE 3711319

(43) Veröffentlichungstag der Anmeldung:
12.10.88 Patentblatt 88/41

(45) Bekanntmachung des Hinweises auf die Patenterteilung:
06.06.90 Patentblatt 90/23

(84) Benannte Vertragsstaaten:
DE FR GB IT

(56) Entgegenhaltungen:
EP-A- 0 168 547
EP-A- 0 219 048
US-A- 4 444 561

(73) Patentinhaber: BASF Aktiengesellschaft,
Carl-Bosch-Strasse 38, D-6700 Ludwigshafen(DE)

(72) Erfinder: Kud, Alexander, Dr., Am Hellbrunn 57,
D-6509 Eppelsheim(DE)
Erfinder: Trieselt, Wolfgang, Dr., Alwin-Mittasch-Platz 1,
D-6700 Ludwigshafen(DE)
Erfinder: Hartmann, Heinrich, Dr., Weinheimer
Strasse 46, D-6703 Limburgerhof(DE)

**Beschreibung**

Aufgrund gesetzgeberischer Maßnahmen ist es in vielen Ländern erforderlich, den Gehalt an Phosphaten in Waschmitteln stark herabzusetzen bzw. phosphatfreie Waschmittel anzubieten. Reduziert man jedoch den Gehalt an Phosphaten in Waschmitteln, so wird dadurch die Waschwirkung der Produkte verschlechtert. Phosphate wirken nicht nur als Sequestriermittel für Erdalkalimetall-Ionen, sondern auch als Inkrustierungs- und Vergrauungsinhibitoren. Während man das Problem der Inkrustierung, d.h. der Ablagerungen mineralischer Herkunft auf dem Waschgut durch Ersatz der Phosphate in Waschmitteln durch andere Stoffe in den Griff bekommen kann, ist dies bei dem Problem der Vergrauung, d.h. des Wiederanschmutzens der Wäsche mit Schmutzteilchen und Fetten beim Waschen noch verbesserungsbedürftig. Das Problem der Vergrauung tritt vor allem bei Synthesefasern enthaltendem Gewebe auf, insbesondere bei Polyester enthaltenden Textilien.

Aus der US-PS 4,444,561 ist bekannt, Copolymerisate, die als charakteristische Monomere

a) 50 bis 90 Gew.% mindestens eines Vinylesters von $C_1$- bis $C_4$-aliphatischen Carbonsäuren,
b) 5 bis 35 Gew.% mindestens eines N-Vinyllactams,
c) 1 bis 20 Gew.% mindestens eines basische Gruppen enthaltenden Monomeren oder dessen Salze oder Quaternierungsprodukte und
d) 0 bis 20 Gew.% mindestens eines mit den Monomeren a), b) und c) copolymerisierbaren sonstigen von Carboxylgruppen und basischen Gruppen freien Monomeren einpolymerisiert enthalten,

als Vergrauungsinhibitoren beim Waschen und Nachbehandeln von synthetische Fasern enthaltendem Textilgut zu verwenden.

Aus der DE-A 3 536 530, die dem Stand der Technik nicht angehört, sowie der EP-A 0 219 948, die zum Stand der Technik gemäß Artikel 54(3) EPÜ gehört, ist bekannt, Pfropfpolymerisate, die erhältlich sind durch Pfropfen von

a) Polyalkylenoxiden eines Molekulargewichts (nach dem Zahlenmittel) von 2.000 bis 100.000 auf Basis von Ethylenoxid, Propylenoxid und/oder Butylenoxid mit
b) Vinylacetat im Gewichtsverhältnis a):b) von 1:0,2 bis 1:10 und deren Acetatgruppen gegebenenfalls bis zu 15 % verseift sein können,

als Vergrauungsinhibitoren beim Waschen und Nachbehandeln von Synthesefasern enthaltendem Textilgut zu verwenden.

Der vorliegenden Erfindung liegt die Aufgabe zugrunde, andere Vergrauungsinhibitoren für Waschmittel und Vergrauungsinhibitoren zum Nachbehandeln von Synthesefasern enthaltendem Textilgut zur Verfügung zu stellen.

Die Aufgabe wird erfindungsgemäß gelöst, wenn man als Vergrauungsinhibitoren Pfropfpolymerisate einsetzt, die erhältlich sind durch Pfropfen von

a) Polyalkylenoxiden eines Molekulargewichts (nach dem Zahlenmittel) von 300 bis 100.000 auf Basis von Ethylenoxid, Propylenoxid und/oder Butylenoxid mit
b) mindestens einem Vinylester, der sich von einer gesättigten 3 bis 6 C-Atome enthaltenden Monocarbonsäure ableitet, Acrylsäuremethylester, Acrylsäureethylester, Methacrylsäuremethylester und/oder Methacrylsäureethylester sowie gegebenenfalls Mischungen aus mindestens einem der genannten Monomeren und bis zu 95 Gew.% Vinylacetat

im Gewichtsverhältnis a):b) von 1:0,2 bis 1:10 und deren Estergruppen gegebenenfalls bis zu 15 Mol% verseift sind.

Die gemäß Erfindung zu verwendenden Produkte sind beispielsweise aus der GB-PS 922 457 bekannt. Als Pfropfgrundlage dienen die oben unter a) angegebenen Polyalkylenoxide eines Molekulargewichts (nach dem Zahlenmittel) von 300 bis 100.000 auf Basis von Ethylenoxid, Propylenoxid und/oder Butylenoxid. Vorzugsweise verwendet man Homopolymerisate des Ethylenoxids oder Copolymerisate, mit einen Ethylenoxidanteil von 40 bis 99 Mol-%. Als Comonomer für diese Copolymerisate kommen Propylenoxid, n-Butylenoxid und/oder Isobutylenoxid in Betracht. Geeignet sind beispielsweise Copolymerisate aus Ethylenoxid und Propylenoxid, Copolymerisate aus Ethylenoxid und Butylenoxid sowie Copolymerisate aus Ethylenoxid, Propylenoxid und mindestens einem Butylenoxid. Der Ethylenoxidanteil der Copolymerisate beträgt vorzugsweise 40 bis 99 Mol%, der Propylenoxidanteil 1 bis 60 Mol-% und der Anteil an Butylenoxid in den Copolymerisaten 1 bis 30 Mol-%. Neben geradkettigen können auch verzweigte Homo- oder Copolymerisate als Pfropfgrundlage verwendet werden.

Verzweigte Copolymerisate werden hergestellt, indem man beispielsweise an mehrwertige niedrigmolekulare Alkohole, z.B. Trimethylolpropan, Pentosen oder Hexosen, Ethylenoxid und gegebenenfalls noch Propylenoxid und/oder Butylenoxide anlagert. Die Alkylenoxid-Einheiten können im Polymerisat statistisch verteilt sein oder in Form von Blöcken vorliegen. Vorzugsweise verwendet man als Komponente a) Polyethylenoxide eines Molekulargewichts (nach dem Zahlenmittel) von 1.000 bis 50.000.

2

Als Komponente b) werden Vinylester eingesetzt, die sich von einer gesättigten 3 bis 6 C-Atome enthaltenden Monocarbonsäure ableiten, sowie Acrylsäuremethylester, Acrylsäureethylester, Methacrylsäuremethylester, Methacrylsäureethylester sowie Mischungen aus mindestens einem der vorstehend genannten Monomeren und bis zu 95 Gew.% Vinylacetat. Geeignete Vinylester, die als alleinige Pfropfkomponente verwendet werden können, sind beispielsweise Vinylpropionat, Vinylbutyrat, Valeriansäurevinylester, i-Valeriansäurevinylester und Capronsäurevinylester. Von den Monomeren der Gruppe b) verwendet man vorzugsweise Vinylpropionat, Methylacrylat oder Mischungen aus Vinylpropionat mit bis zu 95 Gew.% Vinylacetat.

Zur Herstellung der Pfropfpolymerisate werden die in Betracht kommenden Polyalkylenoxide der Komponente a) mit den Monomeren der Komponente b) in Gegenwart von Radikale bildenden Initiatoren oder durch Einwirkung energiereicher Strahlung, worunter auch die Einwirkung energiereicher Elektronen verstanden werden soll, gepfropft. Hierbei kann man so vorgehen, daß man das Polyalkylenoxid in mindestens einem Monomer der Gruppe b) löst und nach Zugabe eines Polymerisationsinitiators die Mischung auspolymerisiert. Die Pfropfpolymerisation kann auch halbkontinuierlich durchgeführt werden, indem man zunächst einen Teil, z.B. 10 % des zu polymerisierenden Gemisches aus Polyalkylenoxid, mindestens einem Monomeren der Gruppe b) und Initiator vorlegt, auf Polymerisationstemperatur erhitzt und nach dem Anspringen der Polymerisation den Rest der zu polymerisierenden Mischung nach Fortschritt der Polymerisation zugibt. Die Pfropfpolymerisate können auch dadurch erhalten werden, daß man die Polyalkylenoxide der Gruppe a) in einem Reaktor vorlegt, auf die Polymerisationstemperatur erwärmt und mindestens ein Monomer der Gruppe b) und Polymerisationsinitiator entweder auf einmal, absatzweise oder vorzugsweise kontinuierlich zufügt und polymerisiert.

Als Polymerisationsinitiatoren eignen sich vor allem organische Peroxide, wie Diacetylperoxid, Dibenzoylperoxid, Succinylperoxid, Di-tert.-butylperoxid, tert.-Butylperbenzoat, tert.-Butylperpivalat, tert.-Butylpermaleinat, Cumolhydroperoxid, Diisopropylperoxidicarbamat, Bis-(o-toluoyl)-peroxid, Didecanoylperoxid, Dioctanoylperoxid, Dilauroylperoxid, tert.- Butylperisobutyrat, tert.-Butylperacetat, Di-tert.-Amylperoxid, tert.-Butylhydroperoxid sowie Mischungen der genannten Initiatoren, Redoxinitiatoren und Azostarter.

Die Pfropfpolymerisation erfolgt im Temperaturbereich von 50 bis 200, vorzugsweise 70 bis 140°C. Sie wird üblicherweise unter atmosphärischem Druck durchgeführt, kann jedoch auch unter vermindertem oder erhöhtem Druck ablaufen. Falls gewünscht, kann die oben beschriebene Pfropfcopolymerisation auch in einem Lösemittel durchgeführt werden. Geeignete Lösemittel sind beispielsweise Alkohole, wie Methanol, Ethanol, n-Propanol, Isopropanol, n-Butanol, sek.-Butanol, tert.-Butanol, n-Hexanol und Cyclohexanol sowie Glykole, wie Ethylenglykol, Propylenglykol und Butylenglykol sowie die Methyl- oder Ethylether der zweiwertigen Alkohole, Diethylenglykol, Triethylenglykol, Glycerin und Dioxan. Die Pfropfcopolymerisation kann auch in Wasser als Lösemittel durchgeführt werden. In diesem Fall liegt zunächst eine Lösung vor, die in Abhängigkeit von der Menge der zugegebenen Monomeren der Komponente b) in Wasser mehr oder weniger gut löslich ist. Um wasserunlösliche Produkte, die während der Polymerisation entstehen, in Lösung zu überführen, kann man beispielsweise organische Lösemittel zusetzen, wie einwertige Alkohole mit 1 bis 3 Kohlenstoffatomen, Aceton oder Dimethylformamid. Man kann jedoch auch bei der Pfropfpolymerisation in Wasser so verfahren, daß man die wasserunlöslichen Pfropfpolymerisate durch Zugabe üblicher Emulgatoren oder Schutzkolloide, z.B. Polyvinylalkohol, in eine feinteilige Dispersion überführt. Als Emulgatoren verwendet man beispielsweise ionische oder nichtionische Tenside, deren HLB-Wert im Bereich von 3 bis 13 liegt. Zur Definition des HLB-Werts wird auf die Veröffentlichung von W.C. Griffin, J. Soc. Cosmetic Chem., Band 5, 249 (1954) hingewiesen.

Die Menge an Tensiden, bezogen auf das Pfropfpolymerisat, beträgt 0,1 bis 5 Gew.%. Bei Verwendung von Wasser als Lösemittel erhält man Lösungen bzw. Dispersionen der Pfropfpolymerisate. Sofern man Lösungen des Pfropfpolymerisates in einem organischen Lösemittel herstellt bzw. in Mischungen aus einem organischen Lösemittel und Wasser, so verwendet man pro 100 Gew.-Teile des Pfropfcopolymerisates 5 bis 200, vorzugsweise 10 bis 100 Gew.-Teile des organischen Lösemittels oder des Lösemittelgemisches.

Das Gewichtsverhältnis der Komponenten a) zu b) im Pfropfpolymerisat beträgt 1:0,2 bis 1:10, vorzugsweise 1:0,5 bis 1:6. Solche Pfropfpolymerisate haben einen K-Wert von 5 bis 200, vorzugsweise 5 bis 70 (bestimmt nach H. Fikentscher in Dimethylformamid bei 25°C und einer Polymerkonzentration von 2 Gew.%). Nach der Pfropfpolymerisation kann das Pfropfpolymerisat einer Hydrolyse unterworfen werden, bei der bis zu 15 Mol% der aufgepfropften Monomeren der Komponente b) gegebenenfalls hydrolysiert werden. So führt beispielsweise die Hydrolyse von Pfropfpolymerisaten, zu deren Herstellung als Komponente b) Vinylester verwendet werden, zu Vinylalkohol-Einheiten enthaltenden Pfropfpolymerisaten. Die Hydrolyse kann beispielsweise durch Zugabe einer Base, wie Natronlauge oder Kalilauge oder auch durch Zugabe von Säuren und gegebenenfalls Erwärmen der Mischung vorgenommen werden.

Die oben beschriebenen Pfropfpolymerisate werden erfindungsgemäß in Waschmitteln mit reduziertem Phosphatgehalt (darunter soll ein Phosphatgehalt von weniger als 25 Gew.% Natriumtriphosphat verstanden werden) oder in phosphatfreien Waschmitteln verwendet. Zur Vergrauungsinhibierung beim Waschen werden die oben beschriebenen Pfropfpolymerisate handelsüblichen Waschmittelformulierungen in einer Menge von 0,1 bis 5, vorzugsweise 0,3 bis 3 Gew.%, bezogen auf die Waschmittelmischung, zugesetzt. Die Pfropfpolymerisate können dabei in Form einer Paste, eines Granulats, einer hochviskosen Masse, als Dispersion oder als Lösung in einem Lösemittel der Waschmittelformulierung zugegeben werden. Die Pfropfpolymerisate können auch an der Oberfläche von Stellmitteln, z.B. Natriumsulfat oder Gerüststoffen (Zeolithen) sowie anderen festen Hilfsstoffen der Waschmittelformulierung adsorbiert werden.

Handelsübliche, pulverförmige Waschmittel, deren Phosphatgehalt unter 25 Gew.% liegt bzw. Waschmittel, die überhaupt phosphatfrei sind, enthalten als einen wesentlichen Bestandteil Tenside, z.B. $C_8$- bis $C_{12}$-Alkylphenolethoxylate, $C_{12}$- bis $C_{20}$-Alkanolethoxylate, sowie Blockcopolymerisate des Ethylenoxids und Propylenoxids. Die Polyalkylenoxide sind bei Raumtemperatur bis zu Temperaturen von 50°C feste Stoffe und gut in Wasser löslich bzw. dispergierbar. Es handelt sich hierbei um lineare oder verzweigte Umsetzungsprodukte von Ethylenoxid mit Propylenoxid und/oder Isobutylenoxid, die eine Blockstruktur besitzen oder die auch statistisch aufgebaut sein können. Die Endgruppen der Polyalkylenoxide können gegebenenfalls verschlossen sein. Hierunter soll verstanden werden, daß die freien OH-Gruppen der Polyalkylenoxide verethert und/oder verestert und/oder aminiert und/oder mit Isocyanaten umgesetzt sein können.

Als Tenside eignen sich auch anionische Tenside, wie $C_8$- bis $C_{12}$-Alkylbenzolsulfonate, $C_{12}$- bis $C_{16}$-Alkansulfonate, $C_{12}$- bis $C_{16}$-Alkylsulfate, $C_{12}$- bis $C_{16}$-Alkylsulfosuccinate und sulfatierte ethoxylierte $C_{12}$- bis $C_{16}$-Alkanole. Pulverförmige Waschmittel enthalten üblicherweise 5 bis 20 Gew.% eines Tensids oder einer Mischung von Tensiden. Der Tensidgehalt von Flüssigwaschmitteln liegt in dem Bereich von 15 bis 50 Gew.%.

Die pulverförmigen Waschmittel können außerdem gegebenenfalls Polycarbonsäuren bzw. deren Salze enthalten, beispielsweise Weinsäure oder Zitronensäure.

Ein weiterer wichtiger Bestandteil in Waschmittelformulierungen sind Inkrustierungsinhibitoren. Bei diesen Stoffen handelt es sich beispielsweise um Homopolymerisate der Acrylsäure, Methacrylsäure und Maleinsäure bzw. um Copolymerisate, z.B. Copolymerisate aus Maleinsäure und Acrylsäure, Copolymerisate aus Maleinsäure und Methacrylsäure bzw. um Copolymerisate von a) Acrylsäure und/oder Methacrylsäure mit b) Acrylsäureestern, Methacrylsäureestern, Vinylestern, Allylestern, Itaconsäureestern, Itaconsäure, Methylenmalonsäure, Methylenmalonsäureester, Crotonsäure und Crotonsäureester. Außerdem kommen Copolymere aus Olefinen und $C_1$- bis $C_4$-Alkyl-vinylethern in Betracht. Das Molekulargewicht der Homo- und Copolymerisate beträgt 1.000 bis 100.000. Die Inkrustationsinhibitoren werden in einer Menge von 0,5 bis 10 Gew.% in Waschmitteln verwendet.

Weitere Mischungsbestandteile von Waschmitteln können auch Korrosionsinhibitoren, monomere, oligomere und polymere Phosphonate, Ethersulfonate auf der Basis von ungesättigten Fettalkoholen, z.B. Oleylalkoholethoxylatbutylether und deren Alkalisalze sein. Pulverförmige Waschmittel können gegebenenfalls auch Zeolithe in einer Menge von 5 bis 30 Gew.% enthalten. Die Waschmittelformulierungen können gegebenenfalls auch Bleichmittel enthalten. Sofern Bleichmittel eingesetzt werden, betragen die üblicherweise angewendeten Mengen 3 bis 25 Gew.%. Als Bleichmittel kommt z.B. Natriumperborat in Betracht. Außerdem können die Waschmittelformulierungen gegebenenfalls Bleichaktivatoren, Weichmacher, Entschäumer, Parfum, Waschalkali (Soda), optische Aufheller und Enzyme enthalten. Stellmittel, wie Natriumsulfat, können wahlweise mitverwendet werden und sind dann in einer Menge von 10 bis 30 Gew.% in den Waschmitteln enthalten.

Die oben beschriebenen Pfropfpolymerisate können auch als Zusatz zu Flüssigwaschmitteln verwendet werden. Die Flüssigwaschmittel enthalten als Abmischkomponente flüssige oder auch feste Tenside, die in der Waschmittelformulierung löslich oder zumindest dispergierbar sind. Als Tenside kommen hierfür die Produkte in Betracht, die auch in pulverförmigen Waschmitteln eingesetzt werden sowie flüssige Polyalkylenoxide bzw. polyalkoxylierte Verbindungen. Falls die Pfropfpolymerisate mit den übrigen Bestandteilen des Flüssigwaschmittels nicht direkt mischbar sind, kann man mit Hilfe geringer Menge an Lösungsvermittlern, z.B. Wasser oder eines mit Wasser mischbaren organischen Lösemittels, z.B. Isopropanol, Methanol, Ethanol, Glykol, Diethylenglykol oder Triethylenglykol, eine homogene Mischung herstellen.

Die Pfropfpolymerisate eignen sich außerdem als Zusatz beim Nachbehandeln von synthetische Fasern enthaltendem Textilgut. Sie werden zu diesem Zweck dem letzten Spülbad eines Waschmaschinenzyklus zugesetzt, wobei der Zusatz entweder zusammen mit einem an dieser Stelle üblicherweise angewendeten Wäscheweichspüler erfolgen kann oder - falls ein Weichspüler nicht erwünscht ist - allein anstelle des Weichspülers. Die Einsatzmengen betragen 0,01 bis 0,3 g/l Waschflotte. Die Verwendung der Pfropfpolymerisate im letzten Spülbad eines Waschmaschinenzyklus hat den Vorteil, daß die Wäsche beim nächsten Waschzyklus weit weniger von abgelösten Schmutzteilchen, die in der Waschflotte vorhanden sind, angeschmutzt wird als ohne den Zusatz des Vergrauungsinhibitors bei der vorangegangenen Wäsche.

Die in den Beispielen angegebenen Teile sind Gew.-Teile, die Angaben in Prozent beziehen sich auf das Gewicht der Stoffe. Die K-Werte der Pfropfpolymerisate wurden nach H. Fikentscher, Cellulosechemie, Band 13, 58-64 und 71-74 (1932) in Dimethylformamid bei einer Temperatur von 25°C und einer Polymerkonzentration von 2 Gew.% gemessen; dabei bedeutet $K = k \cdot 10^3$. Die Molekulargewichte (Zahlenmittel) der eingesetzten Polyalkylenoxide a) wurden aus der OH-Zahl errechnet.

Folgende Produkte wurden verwendet:

Pfropfpolymerisate 1 bis 16

Diese Pfropfpolymerisate wurden gemäß dem aus der GB-PS 922 457 bekannten Verfahren durch Aufpfropfen der in Tabelle 1 angegebenen Monomeren b) auf jeweils 100 Teile eines Polyethylenoxids mit dem ebenfalls in Tabelle 1 angegebenen Molekulargewicht (Zahlenmittel) hergestellt. Die K-Werte der Pfropfpolymerisate sind ebenfalls in Tabelle 1 angegeben.

Tabelle 1

| Pfropf-poly-mer | Monomer | Gewichtsverh. PEO/Monomer | Mn des ein-ges. PEO | K-Wert |
|---|---|---|---|---|
| 1 | Vpr | 1 : 0,5 | 300 | 9,1 |
| 2 | Vpr | 1 : 2,0 | 300 | 12,4 |
| 3 | Vpr | 1 : 2,0 | 9000 | 32,4 |
| 4 | Vpr | 1 : 1,72 | 35000 | 57,9 |
| 5 | Vpr | 1 : 2,3 | 35000 | 53,8 |
| 6 | Vpr | 1 : 3,44 | 35000 | 56,0 |
| 7 | Vpr | 1 : 4,0 | 35000 | 40,5 |
| 8 | MA | 1 : 2,0 | 300 | 16,1 |
| 9* | VPr | 1 : 1,72 | 35000 | 62,9 |
| 10 | VAc/VPr (8:2) | 1 : 2,0 | 6000 | 28,5 |
| 11 | VAc/VPr (1:1) | 1 : 2,0 | 6000 | 25,3 |
| 12 | VAc/VPr (7:3) | 1 : 2,0 | 9000 | 39,0 |
| 13 | VAc/VPr (9:1) | 1 : 1,75 | 6000 | 27,3 |
| 14 | VAc/VPr (9:1) | 1 : 1,75 | 9000 | 40,9 |
| 15 | VAc/MA (8:2) | 1 : 2,0 | 9000 | 39,8 |
| 16 | VAc/MA (9:1) | 1 : 2,0 | 6000 | 26,5 |

VPr = Vinylpropionat
VAc = Vinylacetat
MA = Methylacrylat
PEO = Polyethylenoxid
Mn = Zahlenmittel des Molekulargewichts
* entspricht dem Pfropfpolymer 4, das zu 15 Mol% verseift ist

Die vergrauungsinhibierende Wirkung der oben angegebenen Pfropfpolymerisate wurde folgendermaßen geprüft: Polyesterprüfgewebe und Polyester/Baumwoll-Mischgewebe wurden zusammen mit einem Standard-Schmutzgewebe einer Reihe von 3 Wäschen unterzogen. Das Schmutzgewebe wird nach jeder Wäsche erneuert, wobei das Testgewebe nach jeder Wäsche stärker anschmutzt. Der Weißgrad des Testgewebes nach der 3. Wäsche dient zur Beurteilung des Anschmutzungsgrades. Die Werte werden durch mehrfache Wiederholung und Mittelwertbildung gesichert. Die photometrische Messung der Remission in % wurde im vorliegenden Falle am Elrepho 2000 (Datacolor) bei der Wellenlänge 460 nm gemessen (Barium-Primärweißstandard nach DIN 5033).

Prüfbedingungen

| Prüfgerät | Launder-0-meter |
|---|---|
| Wasserhärte | 3,5 mmol Ca/l, Ca: Mg = 3:2 |
| Flottenmenge | 250 ml |
| Flottenverhältnis | 1:10 |
| Versuchstemperatur | 35 bis 60°C |
| Versuchsdauer | 30 Minuten (mit Aufheizzeit) |
| Waschmittelkonzentration | 8 g/l |

In den Beispielen wurde der Vergrauungsinhibitor jeweils in einer Menge von 0,5 %, bezogen auf das Testwaschmittel zugesetzt. Die Prüfgefäße enthielten jeweils 15 g Testgewebe (5 g Polyester-, 5 g Polyester-Baumwollmisch- und 5 g Baumwollgewebe) und 10 g Schmutzgewebe. Als Schmutzgewebe diente Baumwollschmutzgewebe der Wäschereiforschungsanstalt Krefeld, und zwar WFK 10D.

Das verwendete Testwaschmittel hatte folgende Zusammensetzung:

| | |
|---|---|
| $C_{12}$-Alkylbenzolsulfonat | 6,25% |
| Talgfettalkohol umgesetzt mit 11 Ethylenoxid | 4,7% |
| Seife | 2,8% |
| Na-triphosphat (90% Erhaltungsgrad) | 20% |
| Na-perborat (Tetrahydrat) | 20% |
| $Na_2SO_4$ | 24% |
| Natriumdisilikat | 6% |
| Mg Silikat | 1,25% |
| Carboxymethylcellulose (CMC), Na-Salz | 0,6% |
| Tetranatriumsalz der Ethylendiamintetraessigsäure | 0,2% |
| Rest | Wasser auf 100% |

Es handelt sich also um ein phosphatreduziertes Waschmittel, wie es nach Inkrafttreten der 2. Stufe der Phosphathöchstmengenverordnung zum deutschen Waschmittelgesetz seit Januar 1984 im Handel anzutreffen ist.

Tabelle 2 zeigt die Erhöhung der Remission von Polyester- und Polyester/Baumwollmischgewebe nach Zusatz von 0,5 % der erfindungsgemäß zu verwendenden Produkte, bezogen auf das Gewicht des eingesetzten Testwaschmittels. In Tabelle 2 sind außerdem die Ergebnisse von Vergleichsbeispielen angegeben.

Tabelle 2

| Beispiel Nr. | Zusatz 0,5% bezogen auf Testwaschmittel | % Permission PES | PES/BW |
|---|---|---|---|
| 1 | Pfropfpolymer 1 | 57,3 | 63,6 |
| 2 | Pfropfpolymer 2 | 56,8 | 62,7 |
| 3 | Pfropfpolymer 3 | 62,7 | 62,5 |
| 4 | Pfropfpolymer 4 | 62,3 | 64,9 |
| 5 | Pfropfpolymer 5 | 59,3 | 62,3 |
| 6 | Pfropfpolymer 6 | 57,3 | 62,9 |
| 7 | Pfropfpolymer 7 | 58,5 | 62,7 |
| 8 | Pfropfpolymer 8 | 64,4 | 63,1 |
| 9 | Pfropfpolymer 9 | 61,5 | 62,9 |
| 10 | Pfropfpolymer 10 | 66,7 | 66,3 |
| 11 | Pfropfpolymer 11 | 64,1 | 65,5 |
| 12 | Pfropfpolymer 12 | 65,8 | 66,1 |
| 13 | Pfropfpolymer 13 | 68,7 | 69,2 |
| 14 | Pfropfpolymer 14 | 70,1 | 69,4 |
| 15 | Pfropfpolymer 15 | 68,8 | 69,4 |
| 16 | Pfropfpolymer 16 | 69,1 | 68,3 |
| Vgl. bsp. | | | |
| 1 | -- | 44,8 | 61,2 |
| 2 | VAc/VP/DEAEA-Copol.[1] gem. Bsp. 8 der US-PS 3 333 561 | 55,3 | 61,7 |
| 3 | PEO (Mn = 300) | 42,0 | 56,1 |
| 4 | PEO (Mn = 9000) | 42,5 | 58,6 |
| 5 | PEO (Mn = 35000) | 43,9 | 59,9 |
| 6 | Dispergiertes Polyvinylpropionat (K-Wert: 51,7) | 41,8 | 55,6 |
| 7 | Dispergiertes Polymethylacrylat (K-Wert: 63,2) | 42,5 | 58,8 |
| 8 | Dispergiertes Polyvinylacetat (K-Wert: 42,0) | 44,2 | 50,3 |

[1] VP = Vinylpyrrolidon
DEAEA = Dimethylaminoethylacrylat
VAc = Vinylacetat
Mn = Zahlenmittel der Molmasse

Wie aus der Tabelle 2 hervorgeht, zeigen die erfindungsgemäß zu verwendenden Pfropfcopolymerisate eine bessere Wirkung als Vergrauungsinhibitor als das in Beispiel 8 der US-PS 4,444,561 angegebene Copolymerisat. Die Vergleichsbeispiele machen deutlich, daß dispergiertes Polyvinylpropionat, dispergiertes Polyvinylacetat sowie dispergiertes Polymethylmethacrylat sowie auch Polyethylenoxid allein keine vergrauungsinhibierende Wirkung besitzen.

**Patentansprüche**

1. Verwendung von Polymerisaten als Vergrauungsinhibitoren beim Waschen oder Nachbehandeln von synthetische Fasern enthaltendem Textilgut, dadurch gekennzeichnet, daß man Pfropfpolymerisate einsetzt, die erhältlich sind durch Pfropfen von
a) Polyalkylenoxiden eines Molekulargewichts (nach dem Zahlenmittel) von 300 bis 100.000 auf Basis von Ethylenoxid, Propylenoxid und/oder Butylenoxid mit
b) mindestens einem Vinylester, der sich von einer gesättigten 3 bis 6 C-Atome enthaltenden Monocarbonsäure ableitet, Acrylsäuremethylester, Acrylsäureethylester, Methacrylsäuremethylester und/oder Methacrylsäureethylester sowie gegebenenfalls Mischungen aus mindestens einem der genannten Monomeren und bis zu 95 Gew.% Vinylacetat

im Gewichtsverhältnis a):b) von 1:0,2 bis 1:10 und deren Estergruppen gegebenenfalls bis zu 15 Mol% verseift sind.

2. Verwendung von Pfropfpolymerisaten nach Anspruch 1, dadurch gekennzeichnet, daß sie erhältlich sind durch Pfropfen von

a) Polyalkylenoxiden eines Molekulargewichts (nach dem Zahlenmittel) von 1.000 bis 50.000 und mit einem Ethylenoxidanteil von 40 bis 100 Mol% mit

b) Vinylpropionat, Methylacrylat oder Mischungen aus Vinylpropionat mit bis zu 95 Gew.% Vinylacetat

im Gewichtsverhältnis a):b) von 1:0,5 bis 1:6.

3. Verwendung von Pfropfpolymerisaten nach den Ansprüchen 1 und 2, dadurch gekennzeichnet, daß sie einen K-Wert von 5 bis 200 (bestimmt nach H. Fikentscher in Dimethylformamid bei 25°C und einer Polymerkonzentration von 2 Gew.%) aufweisen.

4. Verwendung von Pfropfpolymerisaten nach Anspruch 1, dadurch gekennzeichnet, daß sie erhältlich sind durch Pfropfen von

a) Polyethylenoxid eines Molekulargewichts (nach dem Zahlenmittel) von 1000 bis 50.000 mit

b) Vinylpropionat

im Gewichtsverhältnis 1:0,5 bis 1:6 und einen K-Wert von 5 bis 200 (bestimmt nach H. Fikentscher in Dimethylformamid bei 25°C und einer Polymerkonzentration von 2 Gew.%) aufweisen.

5. Waschmittel auf der Basis von Tensiden, Gerüststoffen und gegebenenfalls anderen üblichen Zusätzen, dadurch gekennzeichnet, daß sie als vergrauungsinhibierenden Zusatz 0,1 bis 5 Gew.% an Pfropfpolymerisaten enthalten, die erhältlich sind durch Pfropfen von

a) Polyalkylenoxiden eines Molekulargewichts (nach dem Zahlenmittel) von 300 bis 100.000 auf Basis von Ethylenoxid, Propylenoxid und/oder Butylenoxid mit

b) mindestens einem Vinylester, der sich von einer gesättigten 3 bis 6 C-Atome enthaltenden Monocarbonsäure ableitet, Acrylsäuremethylester, Acrylsäureethylester, Methacrylsäuremethylester und/oder Methacrylsäureethylester sowie gegebenenfalls Mischungen aus mindestens einem der genannten Monomeren und bis zu 95 Gew.% Vinylacetat

im Gewichtsverhältnis a):b) von 1:0,2 bis 1:10 und deren Estergruppen gegebenenfalls bis zu 15 Mol% verseift sind.

## Claims

1. Use of a polymer as a grayness inhibitor in the wash or aftertreatment of textile material containing synthetic fibers, wherein the polymer is a graft polymer which is obtainable by grafting

a) a polyalkylene oxide having a number average molecular weight of from 300 to 100,000 and based on ethylene oxide, propylene oxide or butylene oxide, with

b) at least one ester selected from the group consisting of a vinyl ester derived from a saturated monocarboxylic acid having 3 to 6 carbon atoms, methyl acrylate, ethyl acrylate, methyl methacrylate and ethyl methacrylate or a mixture of at least one of said monomers with up to 95% by weight of vinyl acetate in a weight ratio a):b) of from 1:0.2 to 1:10 and up to 15 mole % of whose ester group may have been hydrolyzed.

2. Use of a graft polymer as claimed in claim 1, which is obtainable by grafting

a) a polyalkylene oxide having a number average molecular weight of from 1 000 to 50,000 and an ethylene oxide content of from 40 to 100 mole % with

b) a vinyl propionate, methyl acrylate or a mixture of vinyl propionate with up to 95% by weight of vinyl acetate

in a weight ratio a):b) of from 1:0.5 to 1:6.

3. Use of a graft polymer as claimed in claim 1 or 2, which has a K value of from 5 to 200, determined according to H. Fikentscher in 2% strength by weight solution in dimethylformamide at 25°C.

4. Use of a graft polymer as claimed in claim 1, which is obtainable by grafting

a) a polyethylene oxide having a number average molecular weight of from 1,000 to 50,000 with

b) vinyl propionate

in a weight ratio of from 1:0.5 to 1:6 and has a value of from 5 to 200, determined according to H. Fikentscher in 2% strength by weight solution in dimethylformamide at 25°C.

5. A detergent composition based on a surfactant, a builder and other optional customary additives, containing as grayness inhibitor from 0.1 to 5% by weight of a graft polymer which is obtainable by grafting

a) a polyalkylene oxide having a number average molecular weight of from 300 to 100,000 and based on ethylene oxide, propylene oxide or butylene oxide with

b) at least one ester selected from the group consisting of a vinyl ester derived from a saturated monocarboxylic acid having 3 to 6 carbon atoms, methyl acrylate, ethyl acrylate, methyl methacrylate and ethyl methacrylate or a mixture of at least one of said monomers with up to 95% by weight of vinyl acetate in a weight ratio a):b) of from 1:0.2 to 1:10 and up to 15 mole % of whose ester groups may have been hydrolyzed.

# EP 0 285 935 B1

## Revendications

1. Utilisation de polymères comme inhibiteurs de redéposition lors du lavage ou du traitement ultérieur de produits textiles contenant des fibres synthétiques, caractérisée en ce qu'on utilise des polymères greffés qui sont obtenus par greffage

   a) de poly(oxydes d'alkylène) ayant un poids moléculaire (moyenne en nombre) de 300 à 100 000, à base d'oxyde d'éthylène, d'oxyde de propylène et/ou d'oxyde de butylène, avec

   b) au moins un ester vinylique qui dérive d'un acide monocarboxylique saturé contenant de 3 à 6 atomes de carbone, de l'acrylate de méthyle, de l'acrylate d'éthyle, du méthacrylate de méthyle et/ou du méthacrylate d'éthyle, ainsi le cas échéant que des mélanges d'au moins l'un de ces monomères et de 95% en poids au maximum d'acétate de vinyle,

   dans un rapport en poids de a) à b) de 1:0,2 à 1:10, les groupements esters de ces polymères étant éventuellement saponifiés jusqu'à 15% en moles.

2. Utilisation de polymères greffés selon la revendication 1, caractérisée en ce qu'ils sont obtenus par greffage

   a) de poly(oxydes d'alkylène) ayant un poids moléculaire (moyenne en nombre) de 1000 à 50 000 et une proportion d'oxyde d'éthylène en 40 à 100% en moles, avec

   b) du propionate de vinyle, de l'acrylate de méthyle ou des mélanges de propionate de vinyle avec jusqu'à 95% en poids d'acétate de vinyle,

   dans un rapport en poids de a) à b) de 1:0,5 à 1:6.

3. Utilisation de polymères greffés selon la revendication 1 ou 2, caractérisée en ce qu'ils présentent une valeur K de 5 à 200 (déterminée selon H. Fikentscher dans le diméthylformamide à 25°C et avec une concentration de polymère de 2% en poids).

4. Utilisation de polymères greffés selon la revendication 1, caractérisée en ce qu'ils sont obtenus par greffage

   a) de poly(oxyde d'éthylène) ayant un poids moléculaire (moyenne en nombre) de 1000 à 50 000, avec

   b) du propionate de vinyle,

   dans un rapport en poids de 1:0,5 à 1:6, et en ce qu'ils présentent une valeur K de 5 à 200 (déterminée selon H. Fikentscher dans le diméthylformamide à 25°C et avec une concentration de polymère de 2% en poids).

5. Produits de lavage à base de tensides, d'adjuvants de lavage et éventuellement d'autres additifs usuels, caractérisés en ce qu'ils contiennent, en tant qu'additif inhibiteur de redéposition, de 0,1 à 5% en poids de polymères greffés qui sont obtenus par greffage

   a) de poly(oxydes d'alkylène) ayant un poids moléculaire (moyenne en nombre) de 300 à 100 000, à base d'oxyde d'éthylène, l'oxyde de propylène et/ou d'oxyde de butylène, avec

   b) au moins un ester vinylique qui dérive d'un acide monocarboxylique saturé contenant de 3 à 6 atomes de carbone, de l'acrylate de méthyle, de l'acrylate d'éthyle, du méthacrylate de méthyle et/ou du méthacrylate d'éthyle, ainsi le cas échéant que des mélanges d'au moins l'un de ces monomères et de 95% et poids au maximum d'acétate de vinyle,

   dans un rapport en poids de a) à b) de 1:0,2 à 1:10, les groupements esters de ces polymères étant éventuellement saponifiés jusqu'à 15% en moles.